# DEMANDE DE BREVET EUROPEEN

(11) **EP 4 671 118 A1**
(43) Date de publication de la demande: **31.12.2025**
(21) Numéro de dépôt: 25169547.4
(22) Date de dépôt: 09.04.2025
(51) Int. Cl.: B64C 1/14, B64C 27/00

(54) **AERONEF MUNI D'UNE PAROI TRANSPARENTE FIXEE A UNE STRUCTURE PAR UN SYSTEME ANTICHOCS**

(30) Priorité: 24.06.2024 FR 2406768
(71) Demandeur: Airbus Helicopters, 13725 Marignane Cedex (FR)
(72) Inventeur: BEDUS, Olivier, 13725 MARIGNANE Cedex (FR); ANDRAL, Sébastien, 13725 MARIGNANE Cedex (FR); MONBOISSE, Philippe, 13725 MARIGNANE Cedex (FR)
(74) Mandataire: GPI Brevets

(57) **Abrégé**

La présente invention concerne un aéronef (1) muni d'une paroi transparente (10) interposée entre un milieu intérieur (INT) situé dans l'aéronef (1) et un milieu extérieur (EXT), la paroi transparente (10) étant fixée à une structure porteuse (5) de l'aéronef (1) par un système de fixation (20), la paroi transparente (10) ayant une face interne (11) au regard du milieu intérieur (INT) et une face externe (12) au regard du milieu extérieur (EXT). Le système de fixation (20) comporte au moins un tampon absorbant d'énergie (30) martyr, ledit tampon absorbant d'énergie (30) comprenant au moins un absorbeur d'énergie connecté à la paroi transparente (10) et à la structure porteuse (5), ledit au moins un absorbeur d'énergie comprenant un absorbeur interne (40) accolé contre la face interne (11).

## Description

La présente invention concerne un aéronef muni d'une paroi transparente fixée à une structure par un système antichocs.

Un aéronef comporte de manière conventionnelle au moins une paroi transparente permettant à un occupant de l'aéronef de voir le milieu extérieur. Par exemple, une paroi transparente peut être réalisée à partir de poly(méthacrylate de méthyle), ou peut prendre la forme d'une paroi multicouche à base de verre voire d'une paroi multi-matériaux ou autres.

Selon un état de l'art, une paroi transparente peut être collée et/ou vissée à une structure porteuse de l'aéronef. Alternativement, la paroi transparente peut être disposée dans un cadre qui est collé et/ou vissé à une telle structure porteuse.

Une paroi transparente peut notamment être un élément d'un pare-brise ou d'un hublot dirigé selon le déplacement vers l'avant d'un aéronef. Une telle paroi transparente est susceptible d'être exposée à des chocs, notamment en vol avec un oiseau.

En cas de chocs avec un oiseau, c'est essentiellement la paroi transparente qui participe à l'absorption de l'énergie résultant de l'impact en présence d'une paroi transparente vissée et/ou collée à une structure porteuse, directement ou via un cadre.

Les parois transparentes sont alors dimensionnées pour résister aux impacts des oiseaux selon les exigences des règlements de certification.

Le document CA3066586 A1 suggère de réaliser un pare-brise avec plusieurs parois transparentes différentes pour éviter le remplacement de l'intégralité du pare-brise en cas de chocs destructeurs avec un oiseau.

Le document US 2017/0129587 A1 propose d'attacher un pare-brise à une structure porteuse par des sangles métalliques ou en matériaux composites. Les sangles sont indépendantes et vissées sur les bords du pare-brise. Les sangles visent à réduire ou empêcher la fissuration, la rupture, l'endommagement de la structure porteuse ou la séparation du pare-brise.

Le document US2016/0264230 A1 décrit un pare-brise ayant une première épaisseur et une deuxième épaisseur différentes.

Les documents US 2020/180748 A1 et WO 2014/183614 A1 divulguent des structures de fixation de pare-brise d'hélicoptère dans lesquelles un élément flexible ou un amortisseur élastique est interposé entre un pare-brise transparent et un châssis de l'hélicoptère.

Les documents US 2018/208325 A1 et FR 2 058 954 A5 décrivent quant à eux d'autres systèmes d'absorption d'énergie et sont éloignés de l'invention.

La présente invention a alors pour objet de proposer un aéronef muni d'une paroi transparente fixée à une structure porteuse de manière innovante, par exemple pour pouvoir utiliser une paroi transparente légère.

L'invention vise un aéronef muni d'une paroi transparente interposée entre un milieu intérieur situé dans l'aéronef et un milieu extérieur, la paroi transparente étant fixée à une structure porteuse de l'aéronef par un système de fixation, la paroi transparente ayant une face interne au regard du milieu intérieur et une face externe au regard du milieu extérieur.

Le système de fixation comporte au moins un tampon absorbant d'énergie martyr configuré pour se déformer selon une déformation plastique irréversible, ledit tampon absorbant d'énergie comprenant au moins un absorbeur d'énergie solidarisé, par exemple directement ou indirectement vie une pièce intermédiaire, à la paroi transparente et à la structure porteuse, ledit au moins un absorbeur d'énergie comprenant un absorbeur interne connecté mécaniquement au moins à la face interne.

L'absorbeur interne est connecté mécaniquement à la face interne, à savoir fixé directement ou indirectement via au moins un autre organe de connexion à la face interne, mais n'est pas nécessairement connecté à la face externe de la paroi transparente. Un éventuel absorbeur externe, décrit par la suite et distinct de l'absorbeur interne, peut en revanche être connecté mécaniquement au moins à la face externe directement ou indirectement via un organe intermédiaire.

La paroi transparente peut être une paroi susceptible d'être impactée par un oiseau durant un vol d'avancement. Par exemple, la paroi transparente peut être une paroi de pare-brise, ou d'un hublot.

Dès lors, cette paroi transparente est attachée à la structure porteuse, non pas simplement par de la colle, des rivets et/ou des vis voire un encadrement, mais par le biais d'un ou de plusieurs tampons absorbant d'énergie déformables plastiquement.

En cas d'impact d'un oiseau, la paroi transparente se déforme. Si le choc se produit à faible vitesse et/ou avec un oiseau ayant une masse faible par exemple, la paroi transparente peut absorber l'énergie en résultant, le ou les tampons absorbant d'énergie pouvant éventuellement se déformer élastiquement.

En revanche, en présence d'un choc important, cette déformation induit la déformation plastique d'un ou de plusieurs absorbeurs d'énergie martyr. Le terme « martyr » fait référence à cette déformation plastique irréversible. Ce ou ces absorbeurs d'énergie absorbent ainsi une partie de l'énergie résultant du choc. Au retour de l'aéronef, le ou les tampons absorbant d'énergie peuvent être remplacés lors d'une opération de maintenance.

Par rapport à un aéronef conventionnel, l'invention permet alors de mettre en œuvre des parois transparentes potentiellement plus fines, et donc plus légères pour résister à un même impact avec un oiseau en vol, et/ou peut permettre de supporter un impact plus violent.

L'aéronef peut de plus comporter une ou plusieurs des caractéristiques qui suivent, prises seules ou en combinaison.

Selon une possibilité, l'absorbeur interne peut être fixé à la paroi transparente directement ou par un encadrement.

Ainsi, l'absorbeur interne peut être collé et/ou vissé, voire riveté, à la paroi transparente de manière à être accolé à la face interne. Une déformation de la paroi transparente peut alors générer une force sollicitant l'absorbeur interne.

Alternativement, la paroi transparente peut être solidaire d'un encadrement, l'absorbeur interne étant fixé à cet encadrement. Par exemple, l'encadrement est collé à la paroi transparente, et l'absorbeur interne peut être collé et/ou vissé, voire riveté à l'encadrement. Cette variante peut permettre de ne pas percer la paroi transparente par exemple.

Selon une possibilité compatible avec les précédentes, l'absorbeur interne peut être fixé à la structure porteuse ou à un support interne fixé à la structure porteuse.

L'expression « support » désigne par la suite un organe structurel, telle une plaque éventuellement pliée par exemple, apte à connecter mécaniquement deux pièces. Un support peut être une partie d'un cadre.

Ainsi, l'absorbeur interne peut être fixé directement à la structure porteuse, par exemple par collage et/ou vissage et/ou rivetage. Une fixation par collage présente l'avantage de ne pas nécessiter le perçage de l'absorbeur interne.

Alternativement, l'absorbeur interne peut être fixé indirectement à la structure porteuse. Dans ce cas, l'absorbeur interne peut être fixé à un support interne par exemple par collage et/ou vissage et/ou rivetage. Ce support interne est alors fixé à la structure porteuse, lui aussi par exemple par collage et/ou vissage et/ou rivetage. Cette alternative présente l'avantage de permettre de monter entièrement l'absorbeur interne en dehors de l'aéronef, et de simplement fixer le support interne à la structure porteuse lors d'une phase d'assemblage.

Selon une possibilité compatible avec les précédentes, ledit au moins un absorbeur d'énergie peut comprendre un absorbeur externe connecté mécaniquement au moins à la face externe et fixé à la structure porteuse ou à un support externe fixé à la structure porteuse.

Dans ce cas, l'absorbeur d'énergie peut comporter deux absorbeurs de part et d'autre de la paroi transparente pour optimiser l'absorption d'énergie, notamment selon deux sens opposés. Lorsque la paroi transparente se déforme suite à un impact, un des deux absorbeurs interne et externe peut dans un premier temps se déformer, l'autre absorbeur se déformant dans un second temps.

L'absorbeur externe peut être fixé directement à la structure porteuse, par exemple par collage et/ou vissage et/ou rivetage. Une fixation par collage présente l'avantage de ne pas nécessiter le perçage de l'absorbeur externe.

Alternativement, l'absorbeur externe peut être fixé indirectement à la structure porteuse. Dans ce cas, l'absorbeur externe peut être fixé à un support externe par exemple par collage et/ou vissage et/ou rivetage. Ce support externe est en outre fixé à la structure porteuse, lui aussi par exemple par collage et/ou vissage et/ou rivetage. Cette alternative présente l'avantage de permettre de monter entièrement l'absorbeur externe en dehors de l'aéronef, et de simplement fixer le support externe à la structure porteuse lors d'une phase d'assemblage.

L'absorbeur externe peut être fixé directement à la paroi transparente, par exemple par collage et/ou vissage et/ou rivetage, ou indirectement par exemple par le biais de l'encadrement précité. Eventuellement, ledit absorbeur externe peut être collé et/ou vissé, voire riveté, à la paroi transparente de manière à être accolé à la face externe. Une déformation de la paroi transparente peut alors générer une force sollicitant l'absorbeur externe.

En présence d'un tampon absorbant d'énergie muni à la fois d'un absorbeur interne et d'un absorbeur externe, ledit absorbeur interne et ledit absorbeur externe d'un même tampon absorbant d'énergie peuvent être symétriques par rapport à la paroi transparente.

L'absorbeur interne et l'absorbeur externe peuvent être identiques. Alternativement, ils peuvent être différents, à savoir de forme et/ou de dimensions différentes, en fonction des sollicitations à supporter.

Eventuellement, lorsque l'absorbeur interne est fixé au support interne et l'absorbeur externe est fixé au support externe, l'aéronef peut comporter un cadre comprenant le support externe et le support interne.

La paroi transparente peut être pré-équipée en étant fixée à un cadre via le ou les tampons absorbant d'énergie. Le cadre est ensuite fixé de manière usuelle à la structure porteuse.

Selon une possibilité compatible avec les précédentes, de manière générale deux absorbeurs d'énergie peuvent être différents, à savoir de forme et/ou de dimensions différentes, que ces absorbeurs d'énergie soient du type absorbeur interne ou externe. Les caractéristiques de deux absorbeurs d'énergie peuvent par exemple varier en fonction de leur emplacement.

Par exemple, le système de fixation peut comporter au moins deux dits absorbeurs d'énergie ayant des raideurs différentes selon un même axe, et par exemple selon un axe perpendiculaire à la paroi transparente.

Selon un autre aspect, un absorbeur d'énergie, que ce soit un absorbeur interne ou un absorbeur externe, peut être réalisé selon diverses variantes.

Selon une possibilité compatible avec les précédentes et une première variante, au moins un absorbeur d'énergie peut comporter une structure en forme de z munie de deux tronçons d'extrémité reliés par un tronçon interne, un des tronçons d'extrémité étant solidarisé à la paroi transparente directement ou par un encadrement et l'autre tronçon d'extrémité étant solidarisé à la structure porteuse, directement ou indirectement tel que décrit précédemment.

Une telle structure en z présente l'avantage d'être déformable plastiquement en étant sollicitée selon deux axes, et selon deux sens opposés par axe.

Selon une possibilité compatible avec les précédentes et une deuxième variante, au moins un absorbeur d'énergie peut comporter une structure en nid d'abeilles.

Une structure en nid d'abeilles comporte des alvéoles qui s'étendent selon un axe sensiblement perpendiculaire localement à la paroi transparente.

Les alvéoles de cette structure peuvent alors se déformer, en s'écrasant, pour absorber une partie de l'énergie résultant d'un impact avec la paroi transparente.

Selon une possibilité compatible avec les précédentes et une troisième variante, au moins un absorbeur d'énergie peut comprendre au moins un organe déformable en forme de sphère tronquée et creux, l'organe déformable s'étendant d'une base en arc de cercle jusqu'à un sommet, ladite base étant connectée à la paroi transparente.

Eventuellement, un organe déformable comporte un socle solidaire de la base. Le socle peut avoir une forme de portion de disque ou de disque, et est accolé à la paroi transparente.

Un organe sphérique peut avoir la forme d'un demi-sphère, d'un quart de sphère ou autres. En présence d'un socle, ce socle peut avoir une forme de disque en présence d'un organe sphérique hémisphérique, ou d'un demi-disque en présence d'un organe sphérique en forme de quart de sphère. Les organes sphériques peuvent alors se déformer, en s'écrasant, pour absorber une partie de l'énergie résultant d'un impact avec la paroi transparente.

Il est à noter qu'un tampon absorbant d'énergie peut être muni d'un absorbeur interne et d'un absorbeur externe différents. Par exemple, un absorbeur interne et un absorbeur externe d'un même tampon peuvent relever de la même variante, mais en présentant des caractéristiques dimensionnelles différentes. Selon un autre exemple, un absorbeur interne et un absorbeur externe d'un même tampon peuvent être réalisés selon des variantes différentes.

Selon une possibilité compatible avec les précédentes, le système de fixation peut comporter un unique tampon absorbant d'énergie s'étendant continument sur une bordure de la paroi transparente.

Le tampon absorbant d'énergie s'étend alors selon une ligne fermée à la périphérie de la paroi transparente pour être sollicité quelle que soit la zone d'impact. Différents tronçons du tampon peuvent former différents absorbeurs d'énergie, deux tronçons différents pouvant avoir des raideurs différentes selon un même axe par exemple.

Selon une possibilité compatible avec les précédentes, le système de fixation peut comporter plusieurs tampons absorbant d'énergie espacés l'un de l'autre le long d'une bordure de la paroi transparente.

Plusieurs tampons absorbant d'énergie sont alors situés le long de la périphérie de la paroi transparente pour qu'au moins un tampon absorbant d'énergie soit sollicité quelle que soit la zone d'impact. Au moins deux tampons absorbant d'énergie peuvent être différents, en présentant des absorbeurs relevant de variantes différentes et/ou en ayant des dimensions différentes. Les tampons absorbant d'énergie peuvent être adaptés en fonction de l'énergie estimée à dissiper pour optimiser l'installation, notamment d'un point de vue massique.

L'invention et ses avantages apparaîtront avec plus de détails dans le cadre de la description qui suit avec des exemples donnés à titre illustratif en référence aux figures annexées qui représentent :
la figure 1, une vue de face d'un aéronef selon l'invention,
la figure 2, un schéma montrant un système de fixation selon l'invention,
la figure 3, un schéma montrant un système de fixation ayant un seul tampon absorbant d'énergie,
la figure 4, un schéma montrant un système de fixation ayant plusieurs tampons absorbant d'énergie,
la figure 5, un schéma montrant un tampon absorbant d'énergie ayant un absorbeur interne fixé directement à la structure porteuse,
la figure 6, un schéma montrant un tampon absorbant d'énergie ayant un absorbeur interne fixé indirectement à la structure porteuse,
la figure 7, un schéma montrant un tampon absorbant d'énergie ayant un absorbeur interne fixé indirectement à la paroi transparente,
la figure 8, un schéma montrant un tampon absorbant d'énergie ayant un absorbeur externe fixé indirectement à la structure porteuse,
la figure 9, un schéma montrant un tampon absorbant d'énergie ayant un absorbeur externe fixé directement à la structure porteuse,
la figure 10, un schéma montrant un tampon absorbant d'énergie ayant un absorbeur externe fixé indirectement à la paroi transparente,
la figure 11, un schéma montrant un absorbeur d'énergie ayant une structure en Z,
la figure 12, un schéma montrant un absorbeur d'énergie ayant une structure en nid d'abeilles, et
la figure 13, un schéma montrant un absorbeur d'énergie ayant une structure munie d'au moins un organe sphérique creux.

Les éléments présents dans plusieurs figures distinctes sont affectés d'une seule et même référence.

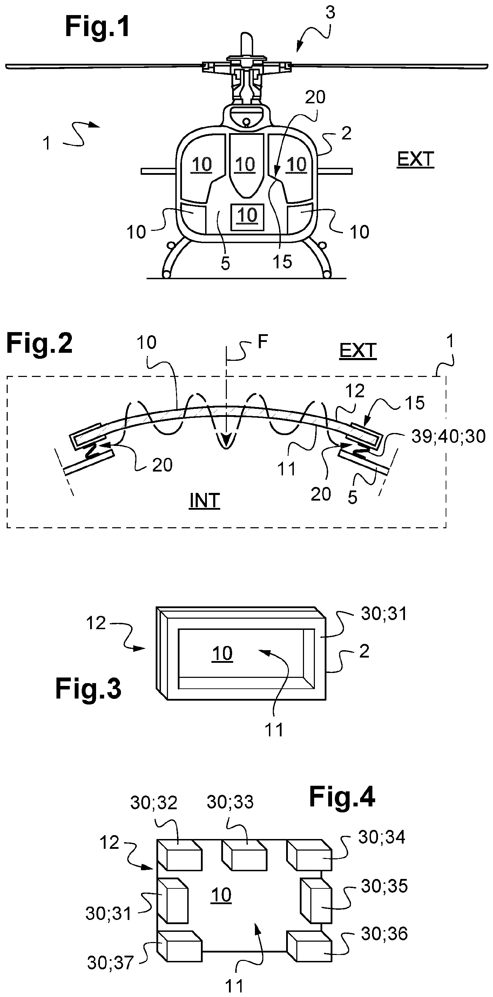

La figure 1 présente un aéronef 1 selon l'invention. Cet aéronef 1 comporte au moins une paroi transparente 10 portée par une structure porteuse 5. Une telle paroi transparente 10 est interposée entre un milieu intérieur situé dans l'aéronef 1 et un milieu extérieur EXT. Selon la figure 2, la paroi transparente 10 s'étend alors selon son épaisseur d'une face interne 11 en regard du milieu intérieur **INT** jusqu'à face externe 12 en regard du milieu extérieur EXT.

La ou les parois transparentes 10 sont susceptibles d'être impactées par un oiseau lors d'un vol, en particulier lorsque l'aéronef 1 se déplace vers l'avant à haute vitesse.

Selon l'invention, une paroi transparente 10 est fixée à la structure porteuse 5 par un système de fixation 20 permettant d'absorber au moins une partie de l'énergie résultant d'un impact avec un oiseau par déformation plastique.

La figure 2 illustre un tel système de fixation 20 selon l'invention.

Ce système de fixation 20 comporte au moins un tampon absorbant d'énergie 30 martyr. La figure 3 illustre la possibilité d'avoir un unique tampon absorbant d'énergie 31 qui s'étend continument sur une bordure 15 de la paroi transparente 10. A l'inverse, la figure 4 illustre la possibilité d'avoir plusieurs tampons absorbant d'énergie 32-37 espacés l'un de l'autre le long de cette bordure 15.

La référence « 30 » désigne n'importe quel tampon absorbant d'énergie, les références 31 à 37 désignant des tampons absorbant d'énergie particuliers si besoin.

En référence à la figure 2 et indépendamment du nombre de tampons absorbant d'énergie 30, un tampon absorbant d'énergie 30 selon l'invention comprend au moins un absorbeur d'énergie 39 martyr qui est solidarisé directement ou indirectement à la paroi transparente 10 et à la structure porteuse 5. Des tronçons différents d'un tampon absorbant d'énergie peuvent former des absorbeurs d'énergie différents, par exemple de raideurs différentes.

Par suite, lorsqu'un oiseau impacte la paroi transparente 10 selon la flèche **F,** la paroi transparente 10 peut se déformer, par exemple en suivant une forme d'onde illustrée avec des traits discontinus. En présence d'un choc générant une énergie faible, la paroi transparente 10 se déforme élastiquement et retourne dans son état initial. Eventuellement, un tampon absorbant d'énergie 30 peut se déformer élastiquement. En présence d'un choc générant une énergie importante, au moins un tampon absorbant d'énergie 30 se déforme plastiquement et absorbe alors une partie de l'énergie résultant du choc. Le terme « martyr » fait référence à une telle déformation plastique. Le terme « sacrificiel » peut aussi être employé pour qualifier le ou les absorbeurs d'énergie.

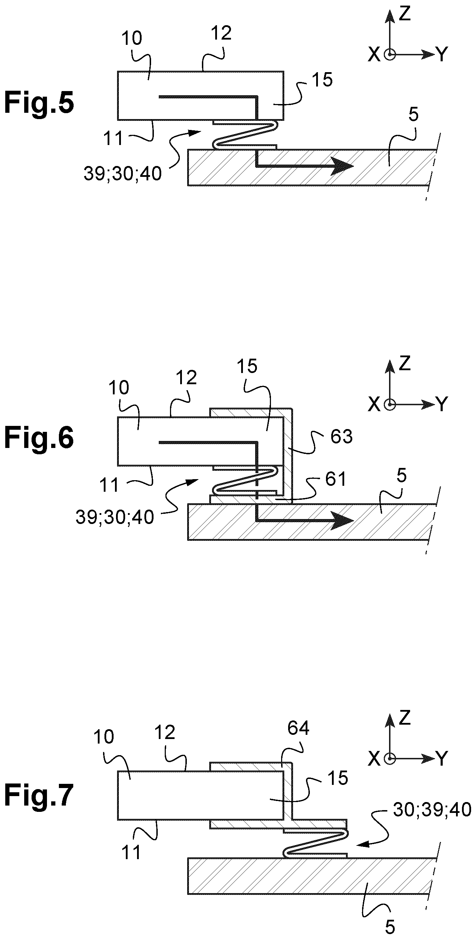

A minima et en référence à la figure 5, un tampon absorbant d'énergie comporte un absorbeur d'énergie 39 de type absorbeur interne 40 connecté à la face interne 11. Selon l'exemple de la figure 5, l'absorbeur interne 40 est accolé contre la face interne 11. L'absorbeur interne 40 peut être fixé à la paroi transparente 10 par exemple par collage et/ou vissage et/ou rivetage, et éventuellement en étant collé à la face interne 11.

De plus, l'absorbeur interne 40 est fixé directement ou indirectement à la structure porteuse 5.

Selon la figure 5, l'absorbeur interne 40 est fixé directement à la structure porteuse 5 par collage et/ou vissage et/ou rivetage par exemple.

Selon la figure 6, l'absorbeur interne 40 est fixé à un support interne 61, par exemple par collage et/ou vissage et/ou rivetage. Le support interne 61 est alors fixé à la structure porteuse 5 par exemple par collage et/ou vissage et/ou rivetage. Ce support interne 61 peut comprendre au moins une plaque mise en forme pour relier l'absorbeur interne 40 à la structure porteuse 5. Par exemple, ce support interne 61 est une partie d'un cadre 63 qui enserre la bordure 15 de la paroi transparente 10.

Selon l'exemple de la figure 7, l'absorbeur interne 40 est connecté mécaniquement de manière indirecte à la face interne 11. En particulier, un encadrement 64 est solidarisé à la bordure 15 de la paroi transparente 10, l'absorbeur interne 40 étant fixé à cet encadrement 64. L'absorbeur interne 40 peut alors être fixé à la structure porteuse 5 soit directement selon l'exemple illustré soit via un support interne selon une variante non illustrée pour ne pas multiplier inutilement les figures.

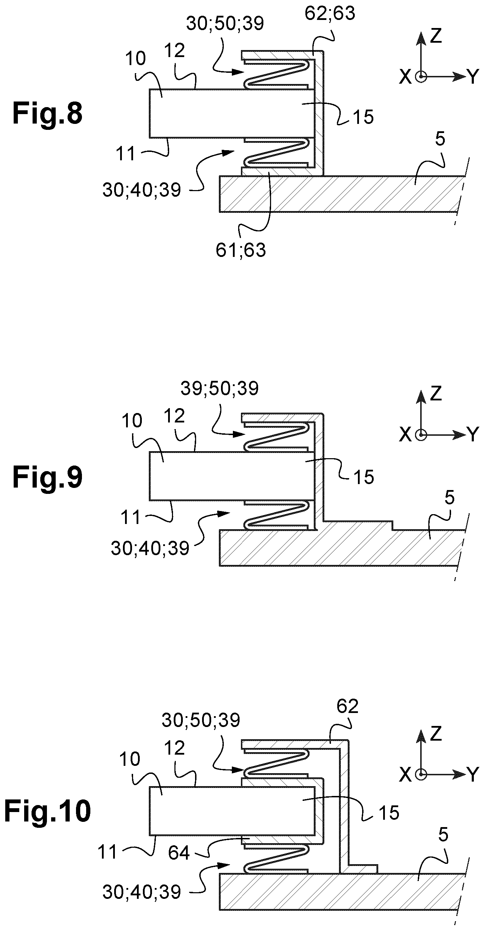

Eventuellement et en référence aux figures 8 à 10, un tampon absorbant d'énergie 30 peut comprendre un absorbeur d'énergie de type absorbeur externe 50 connecté à la face externe 2. L'absorbeur interne 40 et l'absorbeur externe 50 d'un même tampon absorbant d'énergie 30 sont situés de part et d'autre de la paroi transparente 10 et peuvent être identiques ou différents. L'absorbeur interne 40 et l'absorbeur externe 50 d'un même tampon absorbant d'énergie 30 peuvent être symétriques par rapport à la paroi transparente 10.

Par exemple, l'absorbeur externe 50 peut être fixé à la paroi transparente 10 directement par exemple par collage et/ou vissage et/ou rivetage, et éventuellement en étant collé à la face externe 12, ou indirectement via un encadrement qui enserre la bordure 15 de la paroi transparente 10 par exemple.

De plus, l'absorbeur externe 50 est fixé directement ou indirectement à la structure porteuse 5.

Selon la figure 8, l'absorbeur externe 50 est fixé à un support externe 62, par exemple par collage et/ou vissage et/ou rivetage. Le support externe 62 est alors fixé à la structure porteuse 5 par exemple par collage et/ou vissage et/ou rivetage. Ce support externe 62 peut comprendre au moins une plaque mise en forme pour relier l'absorbeur externe 50 à la structure porteuse 5. Par exemple, ce support externe 62 est une partie d'un cadre 63 qui enserre la bordure 15 de la paroi transparente 10, ce cadre 63 pouvant aussi comprendre le support interne 61.

L'absorbeur interne 40 peut être fixé à la face interne directement selon l'exemple illustré ou via un encadrement. En outre, l'absorbeur interne 40 peut être fixé à la structure porteuse directement ou via un support interne 61 selon l'exemple illustré. Le support interne 61 peut être une partie d'un cadre 63 qui enserre la bordure 15.

Selon la figure 9, l'absorbeur externe 50 est fixé directement à la structure porteuse 5 par collage et/ou vissage et/ou rivetage. L'absorbeur interne 40 peut être fixé à la face interne directement selon l'exemple illustré ou via un encadrement. En outre, l'absorbeur interne 40 peut être fixé à la structure porteuse directement selon l'exemple illustré ou via un support interne 61.

Selon l'exemple de la figure 10 l'absorbeur interne 40 et l'absorbeur externe d'un même tampon 50 sont fixés à un encadrement 64 qui enserre la bordure 15 de la paroi transparente.

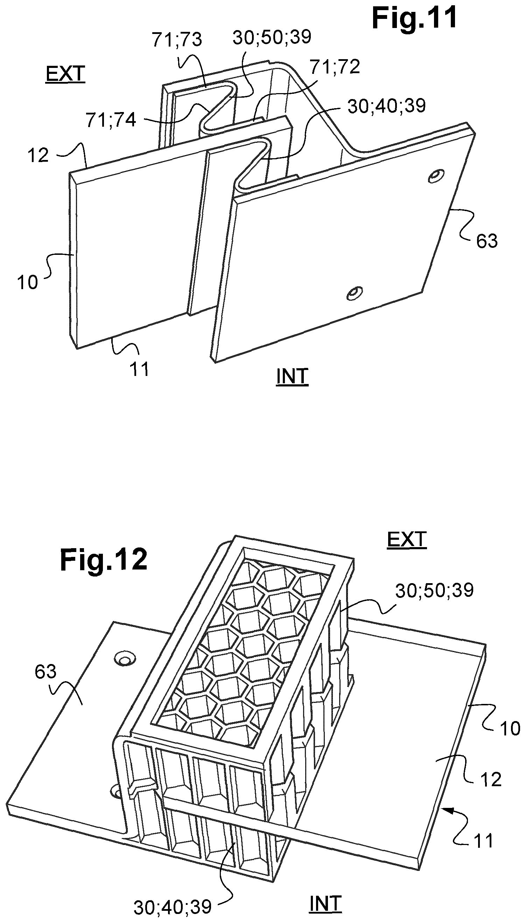

Les figures 11 à 13 illustrent diverses variantes possibles d'absorbeurs d'énergie. Bien que ces figures 11 à 13 illustrent un tampon absorbant d'énergie 30 ayant un absorbeur interne 40 et un absorbeur externe 50 identiques, il est évidemment possible d'avoir des absorbeurs interne 40 et externe 50 différents au sein d'un seul tampon absorbant d'énergie 30, voire de ne pas avoir un absorbeur externe 50. Bien que ces figures 11 à 13 illustrent un tampon absorbant d'énergie 30 ayant un absorbeur interne 40 et un absorbeur externe 50 fixés directement à la paroi transparente 10 et à un cadre 63, il est évidemment possible d'avoir des absorbeurs interne 40 et externe 50 fixés indirectement ou directement à la paroi transparente 10 et à la structure porteuse 5 conformément aux divers exemples précités.

Selon la figure 11, au moins un absorbeur d'énergie 39 comporte une structure 71 en forme de z. Cette structure 71 en forme de z est ainsi munie de deux tronçons d'extrémité 72, 73, sensiblement parallèles, reliés par un tronçon interne 74 oblique. Un des tronçons d'extrémité 72 est alors solidarisé, voire accolé, à la paroi transparente 10, et l'autre tronçon d'extrémité 73 est solidarisé, voire accolé, à la structure porteuse 5 ou à un support 71, 72.

Selon la figure 12, au moins un absorbeur d'énergie 39 comporte une structure 75 en nid d'abeilles. Une structure 75 en nid d'abeilles comporte des alvéoles qui s'étendent selon une direction sensiblement perpendiculaire localement à la paroi transparente 10.

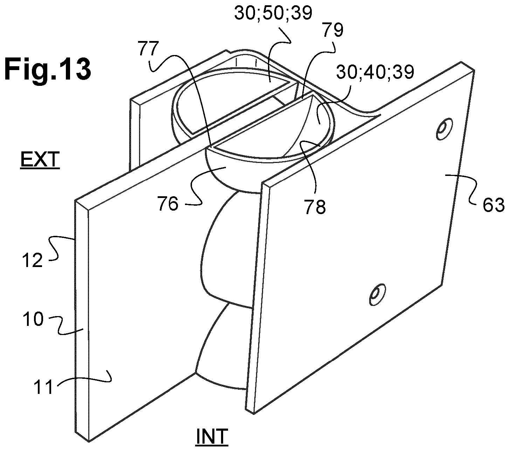

Selon la figure 13, au moins un absorbeur d'énergie 39 présente au moins un organe sphérique 76 creux, et en particulier trois organes sphériques selon les exemples. Chaque organe sphérique a une forme de sphère tronquée. Ainsi, chaque organe sphérique s'étend d'une base 77 décrivant un arc de cercle jusqu'à un sommet 78. La base 77 est alors connectée à la paroi transparente 10, par collage par exemple. Le sommet 78 est à l'inverse fixé à la structure porteuse 5 ou à un support 61,62. En outre, un organe déformable peut comporter un socle 79 solidaire de la base 77.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. **Il** est bien sûr envisageable de remplacer un moyen décrit par un moyen équivalent sans sortir du cadre de la présente invention défini par les revendications.

Par exemple, bien que les figures 3 et 4 illustrent des tampons ayant seulement des absorbeurs internes, au moins un des tampons peut aussi avoir un absorbeur externe.

**Il** est aussi possible d'ajouter à la réalisation de la figure 7 un absorbeur externe fixé à l'encadrement 64 ou à la face externe 12.

Selon un autre exemple, un système de fixation comporte au moins deux absorbeurs d'énergie différents, par exemple de raideurs différentes selon un même axe. A titre illustratif, deux tampons absorbant d'énergie selon la figure 4 présentent deux absorbeurs d'énergie de même forme mais de raideurs différentes, par exemple par le biais d'épaisseurs locales différentes. Selon un autre exemple, le tampon de la figure 3 comporte deux tronçons formant deux absorbeurs d'énergie de même forme mais de raideurs différentes.

## Revendications

1. Aéronef (1) muni d'une paroi transparente (10) interposée entre un milieu intérieur (INT) situé dans l'aéronef (1) et un milieu extérieur (EXT), la paroi transparente (10) étant fixée à une structure porteuse (5) de l'aéronef (1) par un système de fixation (20), la paroi transparente (10) ayant une face interne (11) au regard du milieu intérieur (INT) et une face externe (12) au regard du milieu extérieur (EXT),
**caractérisé en ce que** le système de fixation (20) comporte au moins un tampon absorbant d'énergie (30) martyr configuré pour se déformer selon une déformation plastique irréversible, ledit tampon absorbant d'énergie (30) comprenant au moins un absorbeur d'énergie (39) solidarisé à la paroi transparente (10) et à la structure porteuse (5), ledit au moins un absorbeur d'énergie (40,50) comprenant un absorbeur interne (40) connecté mécaniquement au moins à la face interne (11).

2. Aéronef selon la revendication 1,
**caractérisé en ce que** l'absorbeur interne (40) est fixé à la structure porteuse (5) ou à un support interne (61) fixé à la structure porteuse (5).

3. Aéronef selon l'une quelconque des revendications 1 à 2, **caractérisé en ce que** l'absorbeur interne (40) est fixé à la paroi transparente (10) directement ou par un encadrement (64).

4. Aéronef selon l'une quelconque des revendications 1 à 3, **caractérisé en ce que** ledit au moins un absorbeur d'énergie comprend un absorbeur externe (50) connecté mécaniquement au moins à la face externe (12) et fixé à la structure porteuse (5) ou à un support externe (62) fixé à la structure porteuse (5).

5. Aéronef selon la revendication 4,
**caractérisé en ce que** ledit absorbeur interne (40) et ledit absorbeur externe (50) d'un même tampon absorbant d'énergie (30) sont symétriques par rapport à la paroi transparente (10).

6. Aéronef selon la revendication 2 et l'une quelconque des revendications 4 à 5,
**caractérisé en ce que** l'absorbeur interne (40) étant fixé au support interne (61) et l'absorbeur externe (50) étant fixé au support externe (62), l'aéronef (1) comporte un cadre (63) comprenant le support externe (62) et le support interne (61).

7. Aéronef selon l'une quelconque des revendications 1 à 6, **caractérisé en ce que** le système de fixation (20) comporte au moins deux dits absorbeurs d'énergie (39) ayant des raideurs différentes selon un même axe.

8. Aéronef selon l'une quelconque des revendications 1 à 7, **caractérisé en ce qu'**au moins un absorbeur d'énergie (390) comporte une structure (71) en forme de z munie de deux tronçons d'extrémité (72, 73) reliés par un tronçon interne (74), un des tronçons d'extrémité (72) étant solidarisé à la paroi transparente (10) directement ou par un encadrement (64), et l'autre tronçon d'extrémité étant solidarisé à la structure porteuse (5).

9. Aéronef selon l'une quelconque des revendications 1 à 8, **caractérisé en ce qu'**au moins un absorbeur d'énergie (39) comporte une structure (75) en nid d'abeilles.

10. Aéronef selon l'une quelconque des revendications 1 à 9, **caractérisé en ce qu'**au moins un absorbeur d'énergie (39) a au moins un organe déformable (76) en forme de sphère tronquée et creux, l'organe déformable (76) s'étendant d'une base (77) en arc de cercle jusqu'à un sommet (78), ladite base (77) étant connectée à la paroi transparente (10).

11. Aéronef selon l'une quelconque des revendications 1 à 10, **caractérisé en ce que** le système de fixation (20) comporte un unique tampon absorbant d'énergie (31) s'étendant continument sur une bordure (15) de la paroi transparente (10).

12. Aéronef selon l'une quelconque des revendications 1 à 10, **caractérisé en ce que** le système de fixation (20) comporte plusieurs tampons absorbant d'énergie (32-37) espacés l'un de l'autre le long d'une bordure (15) de la paroi transparente (10).
